# EUROPÄISCHE PATENTSCHRIFT

(11) **EP 4 304 840 B1**
(45) Veröffentlichungstag und Bekanntmachung des Hinweises auf die Patenterteilung: **05.03.2025**
(21) Anmeldenummer: 22713253.7
(22) Anmeldetag: 09.03.2022
(51) Int. Cl.: B29C 65/16, B29C 70/38, B29C 70/16, B29C 70/32, B29C 65/10, B29C 65/14, B29C 65/72, B29C 65/78, B29K 101/10, B29K 105/08

(54) **ABLAGEVORRICHTUNG UND VERFAHREN ZUR HERSTELLUNG EINES BAUTEILS AUS EINEM DUROPLASTISCHEN TOWPREG-HALBZEUG**
APPLICATION DEVICE AND METHOD FOR PRODUCING A COMPONENT FROM A DUROPLASTIC TOWPREG SEMI-FINISHED PRODUCT
DISPOSITIF D'APPLICATION ET PROCÉDÉ DE FABRICATION D'UNE PIÈCE À PARTIR D'UN PRODUIT SEMI-FINI THERMODURCISSABLE DE TECHNOLOGIE TOWPREG

(30) Priorität: 11.03.2021 DE 102021105971
(43) Veröffentlichungstag der Anmeldung: 17.01.2024
(73) Patentinhaber: AZL Aachen GmbH, 52074 Aachen (DE); Conbility GmbH, 52134 Herzogenrath (DE)
(72) Erfinder: EMONTS, Michael, 52134 Herzogenrath (DE)
(74) Vertreter: Heeschen Pültz Patentanwälte PartGmbB
(86) Internationale Anmeldenummer: PCT/DE2022/100189
(87) Internationale Veröffentlichungsnummer: WO 2022/188927

(56) Entgegenhaltungen:
- EP-A1- 1 334 819
- EP-A1- 3 130 444
- EP-A1- 3 260 280
- EP-B1- 2 895 317
- WO-A1-2007/033499
- WO-A1-2016/078977
- FR-A1- 3 100 153
- JP-A- 2020 044 793
- US-A1- 2020 238 609
- US-B1- 10 046 511

## Beschreibung

Die Erfindung betrifft eine Ablagevorrichtung, ein Ablagesystem und ein Verfahren zur Herstellung eines Bauteils aus einem duroplastischen Towpreg-Halbzeug sowie ein Bauteil.

Ablagevorrichtungen und Verfahren zur Herstellung von Bauteilen aus duroplastischen Towpreg-Halbzeugen sind grundsätzlich bekannt. Towpreg-Halbzeuge sind unidirektional endlos faserverstärkte, duroplastisch vorimprägnierte Halbzeuge, die sich von den herkömmlichen Prepregs dadurch unterscheiden, dass die Matrix von Towpreg-Halbzeugen bei Raumtemperatur einen trockenen und im Wesentlichen nicht klebrigen Zustand aufweisen.

Towpreg-Halbzeuge können über einen längeren Zeitraum bei Raumtemperatur gelagert werden. Ferner werden bei Towpreg-Halbzeugen in der Regel keine Schutzpapiere verwendet, welches die einzelnen Lagen herkömmlicher Prepregs voneinander trennt. Towpreg-Halbzeuge zeichnen sich darüber hinaus dadurch aus, dass diese unterhalb einer Vernetzungstemperatur, die auch als Curingtemperatur oder Aushärtungstemperatur bezeichnet wird, bei der eine irreversible Vernetzung eintritt, nahezu beliebig oft erwärmt werden können und die Matrix somit nahezu beliebig oft liquifizierbar ist.

Towpreg-Halbzeuge werden häufig für Anwendungen in der Luft- und Raumfahrttechnik sowie der Automobilindustrie und bei der Herstellung von Wasserstoffdruckbehältern aus kohlenstofffaserverstärkten Kunststoffen eingesetzt. Ein wichtiger Aspekt bei der Verarbeitung von Towpreg-Halbzeugen ist, dass bei der Verarbeitung präzise Prozessparameter eingestellt werden.

Towpreg-Halbzeuge können mit Wickel- oder Ablageeinheiten verarbeitet werden. Insbesondere können auch Mehrfach-Applikatoren mit Einfach- oder Mehrfach-Drehspindelsystemen zum Einsatz kommen. Es ist bekannt, dass Towpreg-Halbzeuge mit einer limitierten Vorschubgeschwindigkeit, beispielsweise kleiner 3 m/s, einem Wickelkörper oder einem Ablagetisch zugeführt werden. Diese Vorschubgeschwindigkeit ist u.a. auch deswegen limitiert, weil die Towpreg-Halbzeuge auf eine Verarbeitungstemperatur aufgewärmt werden müssen. Dies erfolgt vor dem Wickeln bzw. vor dem Ablegen in Heizeinheiten, die beispielsweise das Towpreg-Halbzeug mittels eines erwärmten Fluids und/oder mittels Infrarotstrahlung aufwärmen. Derartige Heizeinheiten sind deswegen wesentlich für die Herstellung von Faserverbundbauteilen, da das zu verlegende Towpreg-Halbzeug üblicherweise vollständig durchwärmt sein muss.

Die US 6 451 152 B1 offenbart beispielsweise die Verarbeitung eines duroplastischen Prepregs mit einem Laser, wobei der Zwickelbereich bestrahlt wird. Darüber hinaus sind aus der WO 2016 / 078 977A1 und der EP 2 895 317 B1 Verfahren des laserunterstützten Tapelegens bekannt. Auch hier werden geringe Vorschubgeschwindigkeiten als wesentlich beschrieben, um hohe Bauteilqualitäten zu gewährleisten.

### Seite 3

Die WO 2007/033499 A1 offenbart formfreie isolierte Spulenwicklungen. Die EP 3 130 444 A1 offenbart Verfahren zur faserverstärkten additiven Fertigung. Die FR 3 100 153 A1 offenbart einen Faserauftragskopf mit besonders weicher Rolle. Die EP 1 334 819 A1 offenbart eine Vorrichtung und ein Hochgeschwindigkeitsverfahren zur Verbindung von Faserverbundwerkstoffen. Die JP 2020 044 793 A offenbart ein Verfahren zur Herstellung einer Tanks mit faserverstärkten Kunststoffschichten.

Der Bedarf an qualitativ hochwertigen Bauteilen aus Faserverbundwerkstoffen steigt stetig. Dies begründet sich durch den steigenden Bedarf an Bauteilen für bekannte Anwendungen einerseits und durch neue Anwendungsbereiche, beispielsweise Wasserstofftanks, andererseits. Die limitierten Prozessgeschwindigkeiten der im Stand der Technik bekannten Vorrichtungen und Verfahren zur Herstellung von Bauteilen aus Towpreg-Halbzeugen schränken jedoch die Anwendungsmöglichkeiten ein, da es weiterhin Verbesserungspotenziale hinsichtlich der Herstellungszeit und der Kosten gibt. Die Bearbeitungszeit für ein einzelnes Bauteil erhöht darüber hinaus die bei der Herstellung anfallenden Kosten, da die kapitalintensiven Maschinen je Bauteil eine längere Bearbeitungszeit aufweisen. Die existierenden Vorrichtungen und Verfahren zur Herstellung von Bauteilen aus duroplastischen Towpreg-Halbzeugen bieten verschiedene Vorteile, jedoch sind weitere Verbesserungen wünschenswert.

Es ist daher eine Aufgabe der vorliegenden Erfindung, eine Ablagevorrichtung, ein Ablagesystem und ein Verfahren zur Herstellung eines Bauteils aus einem duroplastischen Towpreg-Halbzeug sowie ein Bauteil bereitzustellen, die einen oder mehrere der genannten Nachteile vermindern oder beseitigen. Es ist insbesondere eine Aufgabe der Erfindung, eine Lösung bereitzustellen, die die Herstellungszeit für ein Bauteil aus einem Towpreg-Halbzeug reduziert und/oder die dabei entstehenden Kosten vermindert. Ferner ist es eine Aufgabe der Erfindung, eine Lösung bereitzustellen, die die Bauteilqualität eines aus einem Towpreg-Halbzeug hergestellten Bauteils verbessert.

### Seite 3a

Diese Aufgabe wird gelöst mit einer Ablagevorrichtung und einem Verfahren sowie einem Bauteil nach den Merkmalen der unabhängigen Patentansprüche. Weitere vorteilhafte Ausgestaltungen dieser Aspekte sind in den jeweiligen abhängigen Patentansprüchen angegeben. Die in den Patentansprüchen und der Beschreibung einzeln aufgeführten Merkmale sind in beliebiger, technologisch sinnvollerweise miteinander kombinierbar, wobei weitere Ausführungsvarianten der Erfindung aufgezeigt werden.

Die Ablagevorrichtung zur Herstellung des Bauteils aus dem duroplastischen Towpreg-Halbzeug umfasst eine Ablageeinheit zur Führung des Towpreg

Halbzeugs. Die Ablageeinheit weist vorzugsweise ein, zwei oder mehrere Führungselemente zur Führung des Towpreg-Halbzeugs auf. Es ist insbesondere bevorzugt, dass die Ablageeinheit dazu angeordnet und eingerichtet ist, das Towpreg-Halbzeug entlang einer Führungsstrecke zu führen, wobei die Ablageeinheit entlang der Führungsstrecke betrachtet ein erstes Führungsende und ein zweites Führungsende aufweist. Beispielsweise kann das Towpreg-Halbzeug an dem ersten Führungsende der Ablageeinheit zugeführt und am zweiten Führungsende der Ablageeinheit entnommen werden. Es ist bevorzugt, dass sich die Führungsstrecke zumindest von einem Zuführungspunkt bis hin zu einem Entnahmepunkt erstreckt.

Darüber hinaus weist die Ablagevorrichtung eine Lasereinheit zur Emission eines Laserstrahls auf. Die Lasereinheit ist vorzugsweise eine Laseroptik. Die Laseroptik kann beispielsweise mit einer Leichtleitfaser mit einer Laserquelle koppelbar oder gekoppelt sein. Die Lasereinheit kann einen Diodenlaser umfassen oder kann ein Diodenlaser sein. Darüber hinaus kann die Lasereinheit auch ein anderer Laser sein oder diesen umfassen. Ferner kann die Lasereinheit ein Direktstrahler sein.

Es ist bevorzugt, dass die Lasereinheit eine Laserleistung aufweist, die größer 0,3 Kilowatt, größer 1 Kilowatt, größer 2 Kilowatt, größer 3 Kilowatt und/oder größer 4 Kilowatt beträgt. Es ist insbesondere bevorzugt, dass die Laserleistung zwischen 1 Kilowatt und 5 Kilowatt, vorzugsweise zwischen 2 Kilowatt und 4 Kilowatt, beträgt. Der Wellenlängenbereich der Lasereinheit liegt vorzugsweise zwischen 450 und 1080 Nanometer. Die Lasereinheit kann ein Pulslaser und/oder ein Dauerstrichlaser sein.

Die Ablagevorrichtung umfasst darüber hinaus einen Erwärmungsbereich. Der Erwärmungsbereich kann auch von der Ablageeinheit umfasst sein. Der Erwärmungsbereich ist insbesondere derart angeordnet, dass im bestimmungsgemäßen Betrieb der Ablagevorrichtung das Towpreg-Halbzeug durch den Erwärmungsbereich geführt ist bzw. wird. Die Ablageeinheit ist insbesondere zur Führung des Towpreg-Halbzeugs entlang der Führungsstrecke ausgebildet. Die Führungsstrecke führt vorzugsweise durch den Erwärmungsbereich.

Die Lasereinheit ist angeordnet und ausgebildet, das Towpreg-Halbzeug in dem Erwärmungsbereich mit dem Laserstrahl zu beaufschlagen. Das Beaufschlagen mit dem Laserstrahl ist insbesondere ein Bestrahlen mit dem Laserstrahl. Die Lasereinheit ist insbesondere derart angeordnet und ausgebildet, dass der emittierte Laserstrahl auf den Erwärmungsbereich trifft. Hierfür kann der Laserstrahl auch mittels optischer Elemente wie Reflektionselementen von der Lasereinheit hin zum Erwärmungsbereich umgelenkt werden.

Es ist bevorzugt, dass der Laserstrahl das Towpreg-Halbzeug in dem Erwärmungsbereich mit einem flächigen Profil mit beliebigen Außenkonturen erwärmt. Die Lasereinheit kann beispielsweise dazu angeordnet und eingerichtet sein, den Laserstrahl derart zu bilden, dass der Laserstrahl das Towpreg-Halbzeug in dem Erwärmungsbereich mit einem Linienprofil und/oder einem rechteckigen Profil beaufschlagt. Die Lasereinheit kann insbesondere dazu angeordnet und eingerichtet sein, das Towpreg-Halbzeug in dem Erwärmungsbereich durch ein Scannen des Laserstrahls mit dem Laserstrahl zu beaufschlagen. Unter Scannen ist hier zu verstehen, dass die Lasereinheit den Laserstrahl nicht nur stationär auf eine Position abbildet, sondern mit dem Laserstrahl ein Linienprofil auf dem Towpreg-Halbzeug abgefahren wird. Ein Scannen ist auch mit anderen Laserstrahlprofilen, wie dem Rechteckprofil, möglich.

Das Towpreg-Halbzeug ist insbesondere ein Halbzeug aus einem Faserverbundwerkstoff, der eine Vielzahl an unidirektional ausgerichteten Fasern, insbesondere Kohlenstofffasern, und eine duroplastische Matrix aufweist, wobei die duroplastische Matrix eine Verarbeitungstemperatur, beispielsweise zwischen 80 und 100 Grad Celsius, und eine Vernetzungstemperatur, beispielsweise von 120 Grad Celsius, aufweist.

Der Erfindung liegt die Erkenntnis zugrunde, dass die bestehenden Verfahren zur Verarbeitung von Towpregs weiter verbessert werden können. Darüber hinaus liegt der Erfindung die Erkenntnis zugrunde, dass eine weitere Steigerung der Bauteilqualitäten wünschenswert ist, um Sicherheitsfaktoren und/oder die Materialmenge je Bauteil zu reduzieren, sodass Kosten reduziert werden können.

Die Ablagevorrichtung ermöglicht höhere Prozessgeschwindigkeiten durch die Laserbestrahlung des Towpreg-Halbzeugs. Lasereinheiten wurden bisher üblicherweise nicht für die Verarbeitung von Towpregs eingesetzt, da deren Einsatz aufgrund der bisher eingesetzten Prozessgeschwindigkeiten nicht erforderlich war. Durch die Möglichkeit, mit einer Lasereinheit eine vordefinierte Liquifizierung einer Towpreg-Halbzeugoberflächenschicht zu erzielen, wird die Verarbeitungsqualität des Towpregs gesteigert. Infolgedessen können qualitativ hochwertigere Bauteile zu geringeren Kosten hergestellt werden.

Durch den hohen Energieeintrag der Lasereinheit wird darüber hinaus die gezielte Temperierung und somit eine gezielte Liquifizierung des Towpreg-Halbzeugs ermöglicht, beispielsweise sodass lediglich eine Randschicht liquifiziert wird und nicht eine Mittenschicht des Towpreg-Halbzeugs. Darüber hinaus wird mit der Ablagevorrichtung die Einstellung eines gezielten Viskositätsverlaufs in einer Dickenrichtung des Towpreg-Halbzeugs ermöglicht, indem eine gezielte und schnelle Regelbarkeit des laserinduzierten Wärmeeintrags in das Towpreg-Halbzeug bei der Verarbeitung ermöglicht wird. Durch die Möglichkeit, lediglich eine Randschicht des Towpreg-Halbzeugs zu erwärmen, kann die in dem Towpreg-Halbzeug vorgesehene Längsspannung während der Ablage erhöht werden, da nicht die gesamte Towpreg-Dicke liquifiziert wird und die Fasern entsprechend im starren Bereich fixiert bleiben, auch bei höheren Längsspannungen, sodass auch hier eine verbesserte Verarbeitbarkeit und eine bessere Bauteilqualität realisierbar sind. Darüber hinaus kann alternativ mittels des Laserstrahls eine Erwärmung des Towpreg-Halbzeugs über eine Vernetzungstemperatur erreicht werden, sodass die anschließende Zeit im Ofen verringert wird, da die Vernetzung bereits bei der Formgebung initiiert wurde. Weiter kann durch die im Vergleich zum Stand der Technik wesentlich höhere Intensität der Laserstrahlung das Towpreg-Halbzeug schneller erwärmt werden und das Towpreg-Halbzeug auf einer kürzeren Führungsstrecke auf die gewünschte Temperatur erwärmt werden, was die Vorwärmstrecke signifikant verkürzt und zu deutlich höheren Prozessgeschwindigkeiten führt.

Darüber hinaus ist es bevorzugt, dass die Ablageeinheit eine Vorschubeinheit aufweist, die das Towpreg-Halbzeug in einer Vorschubrichtung bewegt, insbesondere mit einer Vorschubbewegung. Darüber hinaus kann die Ablageeinheit eine Kraftmesseinheit aufweisen, die angeordnet und ausgebildet ist, um eine Längsspannung des Towpreg-Halbzeugs zu bestimmen. Darüber hinaus ist es bevorzugt, dass die Ablageeinheit am zweiten Führungsende eine Führungsrolle aufweist, die derart angeordnet und ausgebildet ist, um das Towpreg-Halbzeug mit einem vorbestimmten Winkel entweichen zu lassen.

Eine bevorzugte Ausführungsvariante der Ablagevorrichtung zeichnet sich dadurch aus, dass die Lasereinheit angeordnet und ausgebildet ist, zumindest eine erste Außenfläche des Towpreg-Halbzeugs innerhalb des Erwärmungsbereichs mit dem Laserstrahl zu beaufschlagen. Die erste Außenfläche ist insbesondere eine Unterseite des Towpreg-Halbzeugs. Eine Unterseite ist bei der Verarbeitung von Towpreg-Halbzeugen stets die Seite des Towpreg-Halbzeugs, die mit einem Untergrund, beispielsweise einem Wickelkörper, einem Bauteil oder einem Ablagetisch, im Zeitpunkt des Aufwickelns in Kontakt tritt. Durch die gezielte Erwärmung der ersten Außenfläche, insbesondere der Unterseite, wird eine vordefinierte Verarbeitbarkeit des Towpreg-Halbzeugs erzeugt, sodass ein verbessertes Ablegen bzw. ein verbessertes Wickeln ermöglicht wird. Bei einer kompletten Erwärmung des Towpreg-Halbzeugs gemäß dem Stand der Technik und der daraus resultierenden Liquifizierung der kompletten Towpreg-Dicke, kann es nach dem Aufwickeln des Towpreg-Halbzeugs aufgrund der prozessbedingten Towpreg-Spannungen zu Verschiebungen der Fasern relativ zueinander im Querschnitt kommen, was sich negativ auf die resultierenden Bauteilqualitäten auswirkt. Durch die gezielte und vergleichsweise schnelle sowie regelbare Erwärmung der Unterseite des Towpreg-Halbzeugs durch Laserstrahlung ist es möglich, solche Verschiebungen zu reduzieren oder gar zu vermeiden. Folglich wird eine verbesserte Bauteilqualität erreicht.

Es ist darüber hinaus bevorzugt, dass die Lasereinheit derart angeordnet ist, dass das Towpreg-Halbzeug beabstandet von einem Zwickelbereich mit dem Laserstrahl erwärmbar ist. Dies bedeutet insbesondere, dass der Erwärmungsbereich beabstandet von dem Zwickelbereich vorgesehen ist. Infolgedessen wird die Erwärmung des Towpreg-Halbzeugs vereinfacht und gezielter möglich. Zudem wird ausschließlich die Towpreg-Unterseite mit Laserstrahlung beaufschlagt und nicht der Zwickelbereich, so dass das Bauteil/ die bereits abgelegten Towpregs nicht durch die Laserstrahlung bestrahlt und hierdurch beeinflusst werden. Der Zwickelbereich ist insbesondere der Bereich, in dem das Towpreg-Halbzeug auf einen Wickelkörper, beispielsweise ein rotationssymmetrisches Bauteil, trifft. Insbesondere es bevorzugt, dass der Erwärmungsbereich entlang der Führungsstrecke befindlich ist und von dem Zwickelbereich beabstandet ist.

Die Ablagevorrichtung zeichnet sich dadurch aus, dass die Ablageeinheit ein Prozessgehäuse umfasst, durch welches das Towpreg-Halbzeug hindurchführbar ist, wobei der Erwärmungsbereich innerhalb des Prozessgehäuses befindlich ist. Die Führungsstrecke führt vorzugsweise durch das Prozessgehäuse hindurch. Das Prozessgehäuse weist vorzugsweise einen Gehäuseinnenraum auf, wobei der Erwärmungsbereich innerhalb des Gehäuseinnenraum befindlich ist. Das Prozessgehäuse weist vorzugsweise einen Halbzeugeintritt und einen Halbzeugaustritt auf, die derart angeordnet sind, dass das Towpreg-Halbzeug durch den Halbzeugeintritt in das Prozessgehäuse eintritt und durch den Halbzeugaustritt aus dem Prozessgehäuse heraustritt. Insbesondere sind der Halbzeugeintritt, der Halbzeugaustritt als auch ein diese beiden verbindender Halbzeugabschnitt Teil der Führungsstrecke. Der Gehäuseinnenraum ist vorzugsweise zwischen dem Halbzeugeintritt und dem Halbzeugaustritt angeordnet, wobei ferner vorzugsweise der Halbzeugeintritt und der Halbzeugaustritt als Öffnungen des Prozessgehäuses ausgebildet sind. Die Lasereinheit ist insbesondere derart angeordnet und ausgebildet, um das Towpreg-Halbzeug zwischen dem Halbzeugeintritt und dem Halbzeugaustritt mit dem Laserstrahl zu beaufschlagen.

Das Prozessgehäuse weist vorzugsweise Strahlenschutzwandungen auf, die das Umfeld des Prozessgehäuses im Wesentlichen vor Laserstrahlen abschirmen. Weiter kann dadurch, dass das Prozessgehäuse bereits einen lokalen Laserschutz bereitstellt, auf eine Laserschutzkabine und/oder weiteren Laserschutz für tolerierte austretende Reststreu-Strahlung verzichtet werden, oder mit deutlich weniger Aufwand umgesetzt werden, was zu deutlich einfacheren und kostengünstigeren Vorrichtungen führt.

Darüber hinaus ist es bevorzugt, dass das Prozessgehäuse eine Laserstrahlenschutzeinheit aufweist. Die Laserstrahlenschutzeinheit kann beispielsweise als ein Laserstrahlenschutzlabyrinth ausgebildet sein. Die Laserstrahlenschutzeinheit grenzt vorzugsweise an den Halbzeugeintritt und/oder an den Halbzeugaustritt an.

Eine weitere bevorzugte Fortbildung der Ablagevorrichtung zeichnet sich dadurch aus, dass die Lasereinheit mit dem Prozessgehäuse gekoppelt ist. Beispielsweise kann die Lasereinheit an dem Prozessgehäuse angeordnet sein oder innerhalb des Prozessgehäuses angeordnet sein. Die Lasereinheit kann außerhalb des Prozessgehäuses angeordnet sein, wobei der von der Lasereinheit emittierte Laserstrahl mittels optischer Elemente und/oder optisch leitender Elemente zu dem Erwärmungsbereich innerhalb des Prozessgehäuses geleitet werden kann. Es ist insbesondere bevorzugt, dass die Lasereinheit derart angeordnet und ausgebildet ist, dass der von der Lasereinheit emittierte Laserstrahl in das Prozessgehäuse gelangt und in den Erwärmungsbereich geführt ist. Die Lasereinheit kann hierfür teilweise oder vollständig innerhalb des Prozessgehäuses angeordnet sein. Darüber hinaus kann die Lasereinheit mit dem Prozessgehäuse derart gekoppelt sein, dass der emittierte Laserstrahl mittels eines Reflektionselements, beispielsweise eines Teilerspiegels, von der Lasereinheit zum Erwärmungsbereich geführt ist.

Eine weitere bevorzugte Fortbildung der Ablagevorrichtung zeichnet sich dadurch aus, dass die Lasereinheit und/oder die Ablageeinheit derart angeordnet und ausgebildet ist bzw. sind, dass der Laserstrahl im Wesentlichen orthogonal auf das Towpreg-Halbzeug trifft. Durch eine derartige Anordnung der Lasereinheit und/oder der Ablageeinheit wird eine besonders vorteilhafte Absorption der Laserstrahlung und somit eine effiziente Erwärmung ermöglicht. Zudem wird dadurch eine Reduzierung von in den Halbzeugeintritt oder -austritt gelangender Streustrahlung erreicht.

Es ist darüber hinaus bevorzugt, dass in einem Strahlengang des Laserstrahls zwischen der Lasereinheit und dem Erwärmungsbereich ein Teilerspiegel angeordnet ist, der den Laserstrahl umlenkt. Es ist bevorzugt, dass der Teilerspiegel derart angeordnet und ausgebildet ist, dass der Laserstrahl um kleiner gleich 90 Bogengrad und/oder größer gleich 90 Bogengrad umgelenkt wird. Insbesondere ist es bevorzugt, dass der Teilerspiegel eingerichtet ist, den Laserstrahl um 90 Bogengrad umzulenken. Mittels des Teilerspiegels wird die Anordnung der Lasereinheit flexibilisiert. Beispielsweise kann die Lasereinheit derart geordnet sein, dass der emittierte Laserstrahl zunächst im Wesentlichen parallel zur Bewegungsrichtung des Towpreg-Halbzeugs ausgerichtet ist. Mittels des Teilerspiegels kann der Laserstrahl dann derart umgelenkt werden, dass dieser beispielsweise senkrecht auf das Towpreg-Halbzeug trifft. Es ist darüber hinaus bevorzugt, dass der Teilerspiegel eine von dem Towpreg-Halbzeug in dem Erwärmungsbereich erzeugte Wärmestrahlung transmittiert.

Ferner ist es bevorzugt, dass die Ablagevorrichtung eine erste Temperaturmesseinheit umfasst, die angeordnet und ausgebildet ist, um eine erste Temperatur des Towpreg-Halbzeugs in dem Erwärmungsbereich zu ermitteln. Die erste Temperaturmesseinheit kann beispielsweise ein Pyrometer oder eine Thermokamera sein. Insbesondere ist es bevorzugt, dass die erste Temperaturmesseinheit dazu angeordnet und eingerichtet ist, eine erste Temperatur der ersten Außenfläche des Towpreg-Halbzeugs zu ermitteln.

Es ist darüber hinaus bevorzugt, dass die erste Temperaturmesseinheit angeordnet und ausgebildet ist, um die durch den Teilerspiegel transmittierte Wärmestrahlung zu erfassen und die erste Temperatur des Towpreg-Halbzeugs, insbesondere der ersten Außenfläche des Towpregs, in dem Erwärmungsbereich basierend auf der erfassten Wärmestrahlung zu ermitteln.

Es ist insbesondere bevorzugt, dass die erste Temperaturmesseinheit eingerichtet ist, ein die erfasste Wärmestrahlung charakterisierendes erstes Temperatursignal zu erzeugen, auszuwerten und auf Basis dessen die erste Temperatur zu ermitteln. Darüber hinaus kann es bevorzugt sein, dass die erste Temperaturmesseinheit mit der im Folgenden näher beschriebenen Steuerungsvorrichtung signaltechnisch gekoppelt ist und wobei die Steuerungsvorrichtung eingerichtet ist, auf Basis des ersten Temperatursignals die erste Temperatur zu ermitteln.

Weiter kann die Ablagevorrichtung zumindest eine weitere Messeinheit umfassen, die dazu angeordnet und eingerichtet ist, eine oder mehrere der folgenden Qualitätskriterien des Towpreg-Halbzeugs zu erfassen: eine Geometrie des Towpreg-Halbzeugs, Toleranzen der Geometrie des Towpreg-Halbzeugs, eine Rauheit einer Oberfläche, vorzugsweise der ersten und/oder zweiten Außenfläche des Towpreg-Halbzeugs und eine Faserverteilung des Towpreg-Halbzeugs. Vorzugsweise ist die zumindest eine weitere Messeinheit dazu eingerichtet, die eine oder die mehreren Qualitätskriterien vor und/oder nach dem Erwärmungsbereich und/oder in dem Erwärmungsbereich zu erfassen. Somit ist es möglich, die Qualitätskriterien vor, während und nach der Erwärmung zu vergleichen.

Eine weitere bevorzugte Ausführungsvariante der Ablagevorrichtung umfasst eine zweite Temperaturmesseinheit, die angeordnet und ausgebildet ist, eine zweite Temperatur einer der ersten Außenfläche gegenüberliegenden zweiten Außenfläche des Towpreg-Halbzeugs zu ermitteln. Vorzugsweise ist die zweite Temperaturmesseinheit eingerichtet, um ein die zweite Temperatur charakterisierendes Temperatursignal zu erzeugen und die zweite Temperatur auf Basis des zweiten Temperatursignals zu ermitteln. Darüber hinaus kann die zweite Temperaturmesseinheit das zweite Temperatursignal der im Folgenden näher erläuterten Steuerungsvorrichtung bereitstellen, wobei die Steuerungsvorrichtung eingerichtet ist, die zweite Temperatur auf Basis des zweiten Temperatursignals zu ermitteln. Die zweite Temperaturmesseinheit kann mit der Steuerungsvorrichtung signaltechnisch gekoppelt sein, um das zweite Temperatursignal der Steuerungsvorrichtung bereitzustellen. Mittels der zweiten Temperaturmesseinheit kann sichergestellt werden bzw. die Lasereinheit derart eingestellt werden, dass die Vernetzungstemperatur im Bereich der zweiten Außenfläche nicht erreicht wird und eine vollständige Liquifizierung des Towpreg-Halbzeugs vermieden wird.

In einer weiteren Ausführungsform der Ablagevorrichtung umfasst diese eine Kühlvorrichtung, die angeordnet und eingerichtet ist, die Lasereinheit zu kühlen. Insbesondere kann die Kühlvorrichtung dazu eingerichtet sein, die Lasereinheit mit Kühlwasser zu kühlen. Die Ablagevorrichtung kann weiter eine Temperaturmesseinheit umfassen, die dazu angeordnet und eingerichtet ist, eine Temperatur des Kühlmittels vor und nach dem Kühlen der Lasereinheit zu erfassen. Bei signifikanten Änderungen des Temperaturunterschieds der beiden Temperaturen kann auf Fehler bei der Erwärmung des Towpreg-Halbzeugs geschlossen werden.

In einer weiteren bevorzugten Ausführungsvariante der Ablagevorrichtung ist vorgesehen, dass diese eine, zwei oder mehrere weitere Temperaturmesseinheiten umfasst, die angeordnet ist bzw. sind, um eine Temperatur des Towpreg-Halbzeugs innerhalb des Erwärmungsbereiches, und/oder entlang der Führungsstrecke bzw. in einer Bewegungsrichtung des Towpreg-Halbzeugs vor und/oder nach dem Erwärmungsbereich zu ermitteln. Die im Vorherigen genannten ersten, zweiten und weiteren Temperaturmesseinheiten können beispielsweise ein Pyrometer oder eine Thermokamera sein und mit der Steuerungsvorrichtung signaltechnisch gekoppelt sein.

Darüber hinaus ist es bevorzugt, dass die Ablagevorrichtung eine Vorspannungseinheit zur Erzeugung einer Längsspannung im Towpreg-Halbzeug umfasst. Die Vorspannungseinheit ist insbesondere derart ausgebildet, dass die Längsspannung zwischen 0 N bis mehr als 200 N beträgt. Die Vorspannungseinheit ist insbesondere derart ausgebildet, dass die Längsspannung im Towpreg-Halbzeug mehr als 50 Newton, mehr als 100 Newton, mehr als 200 Newton, mehr als 300 Newton, mehr als 400 Newton, mehr als 500 Newton und/oder mehr als 1000 Newton beträgt.

Darüber hinaus ist es bevorzugt, dass die Ablagevorrichtung eine Kraftmesseinheit, insbesondere eine Kraftmessdose, umfasst, die angeordnet und ausgebildet ist, um die Längsspannung im Towpreg-Halbzeug zu ermitteln. Es ist insbesondere bevorzugt, dass die Vorspannungseinheit mit der Kraftmesseinheit gekoppelt ist, insbesondere signaltechnisch gekoppelt ist.

Eine weitere bevorzugte Ausführungsvariante der Ablagevorrichtung zeichnet sich dadurch aus, dass diese eine Vorwärmstation umfasst, die bezogen auf eine Bewegungsrichtung des Towpreg-Halbzeugs vor dem Erwärmungsbereich angeordnet ist. Die Vorwärmstation ist insbesondere derart ausgebildet, dass diese das Towpreg-Halbzeug mittels eines warmen Fluides, beispielsweise eines Heizgases, oder Infrarotstrahlung erwärmt.

Eine weitere bevorzugte Fortbildung der Ablagevorrichtung umfasst eine mit der Lasereinheit und/oder mit der Ablageeinheit signaltechnisch gekoppelte Steuerungsvorrichtung zum Steuern und/oder Regeln zumindest eines Laserparameters der Lasereinheit, einer Vorschubgeschwindigkeit des Towpreg-Halbzeugs und/oder der Längsspannung des Towpreg-Halbzeugs. Laserparameter können die Laserleistung, die Dauer der Beaufschlagung und/oder der Ort der Beaufschlagung sein.

Die Steuerungsvorrichtung ist insbesondere eingerichtet, die Lasereinheit, insbesondere die Laserleistung der Lasereinheit, derart zu steuern, dass das Towpreg-Halbzeug durch den Laserstrahl zumindest teilweise, vorzugsweise vollständig, liquifiziert wird. Liquifizieren bedeutet insbesondere, dass zumindest ein Teil des Towpreg-Halbzeugs verflüssigt oder aufgeweicht wird. Mit anderen Worten wird das Towpreg-Halbzeug durch den Laserstrahl zumindest teilweise derart erwärmt, dass eine Viskosität des beaufschlagten Towpreg-Halbzeugteils erreicht wird.

Darüber hinaus ist es bevorzugt, dass die Steuerungsvorrichtung eingerichtet ist, die Lasereinheit, insbesondere die Laserleistung der Lasereinheit, derart zu steuern, dass eine Randschicht des Towpreg-Halbzeugs liquifiziert wird. Ferner ist es bevorzugt, dass eine Mittenschicht und eine weitere der Randschicht gegenüberliegende Randschicht des Towpreg-Halbzeugs im Wesentlichen unliquifiziert bleibt. Die Randschicht umfasst vorzugsweise die erste Außenfläche. Die Mittenschicht ist insbesondere zwischen der ersten Außenfläche und der zweiten Außenfläche angeordnet, insbesondere zwischen der Randschicht und einer weiteren Randschicht, welche vorzugsweise die zweite Außenfläche umfasst. Dadurch, dass nur die Randschicht und nicht die Mittenschicht liquifiziert wird, kann die Gesamtsteifigkeit des Towpreg-Halbzeugs gezielt eingestellt werden. Außerdem wird die Möglichkeit einer Beweglichkeit der einzelnen Fasern des Towpreg-Halbzeugs relativ zueinander hierdurch eingeschränkt, was sich positiv auf die resultierenden Bauteilqualitäten auswirkt. Die Tiefe der Randschicht beträgt vorzugsweise weniger als 20 %, weniger als vorzugsweise 10 % und/oder weniger als 5 % der Dicke des Towpreg-Halbzeugs.

Darüber hinaus ist es bevorzugt, dass die Steuerungsvorrichtung eingerichtet ist, die Lasereinheit, insbesondere die Laserleistung der Lasereinheit, derart zu steuern, dass eine vordefinierte Viskosität der Randschicht eingestellt wird. Hierfür wird insbesondere auf Grundlage der bekannten Materialparameter des Towpreg-Halbzeugs eine korrespondierende Laserleistung eingestellt, sodass die vordefinierte Viskosität eingestellt wird. Darüber hinaus kann die Steuerungsvorrichtung eingerichtet sein, die Lasereinheit, insbesondere die Laserleistung der Lasereinheit, derart zu steuern, dass das Towpreg-Halbzeug auf eine Temperatur erwärmt wird, die zumindest einer Vernetzungstemperatur des Towpreg-Halbzeugs entspricht.

In einer weiteren bevorzugten Ausführungsvariante der Ablagevorrichtung ist vorgesehen, dass die Steuerungsvorrichtung eingerichtet ist, um die Lasereinheit, insbesondere die Laserleistung der Lasereinheit, basierend auf der ersten Temperatur, der zweiten Temperatur und/oder einer weiteren von dem Towpreg-Halbzeug gemessenen Temperatur innerhalb des Erwärmungsbereiches und/oder einer von dem Towpreg-Halbzeug gemessenen Temperatur vor und/oder nach dem Erwärmungsbereich entlang der Führungsstrecke bzw. in Bewegungsrichtung des Towpreg-Halbzeugs zu steuern.

In einer weiteren bevorzugten Ausführungsvariante der Ablagevorrichtung ist vorgesehen, dass in einem Speicher der Steuerungsvorrichtung Zusammenhänge zwischen Materialviskositäten und Temperaturen hinterlegt sind und wobei die Steuerungsvorrichtung eingerichtet ist, die Lasereinheit basierend auf einer eine Viskosität charakterisierende Viskositätseingabe zu steuern, wobei die Viskosität basierend auf den hinterlegten Zusammenhängen bestimmt wird.

Gemäß einem weiteren Aspekt wird die eingangs genannte Aufgabe gelöst durch ein Ablagesystem zur Herstellung eines Bauteils aus einem duroplastischen Towpreg-Halbzeug, umfassend eine Ablagevorrichtung nach einer der im Vorherigen genannten Ausführungsvarianten und eine mit der Ablagevorrichtung gekoppelte Handhabungseinheit, wobei die Handhabungseinheit angeordnet und ausgebildet ist, um die Ablagevorrichtung zu bewegen. Insbesondere ist die Handhabungseinheit angeordnet und ausgebildet, um die Ablagevorrichtung in eine, zwei oder drei Raumrichtungen zu bewegen und/oder um die Ablagevorrichtung um eine, zwei oder drei Raumrichtungen zu rotieren. Die Handhabungseinheit kann beispielsweise ein Knickarmroboter oder eine Gantrymaschine sein. Des Weiteren kann die Handhabungseinheit eine Linearachse mit einer Schwenk- und/oder Dreheinheit sein.

### Seite 15

Gemäß einem weiteren Aspekt wird die eingangs genannte Aufgabe gelöst durch ein Verfahren zur Herstellung eines Bauteils aus einem duroplastischen Towpreg-Halbzeug mit einer Ablagevorrichtung nach einer der im Vorherigen beschriebenen Ausführungsvarianten, umfassend die Schritte: Bereitstellen des duroplastischen Towpreg-Halbzeugs, Führen des Towpreg-Halbzeugs entlang einer Führungsstrecke zu einem Ablegebereich und/oder einem Wickelbereich, und Erwärmen des Towpreg-Halbzeugs in dem Erwärmungsbereich mit dem Laserstrahl, wobei der Erwärmungsbereich entlang der Führungsstrecke betrachtet vor dem Ablegebereich und/oder dem Wickelbereich ist.

Der Ablegebereich kann beispielsweise Teil eines Bauteils, eines Wickelkörpers oder ein Ablagetisch sein. Insbesondere ist der Ablegebereich ein Bereich des Bauteils, des Wickelkörpers oder des Ablagetisches, bei dem das Towpreg-Halbzeug auf das Bauteil, den Wickelkörper oder den Ablagetisch aufgewickelt bzw. abgelegt wird. Mit anderen Worten ist der Ablegebereich der Bereich, bei dem das Towpreg-Halbzeug in Kontakt mit dem Bauteil, dem Wickelkörper oder dem Ablagetisch kommt. Der Erwärmungsbereich befindet sich insbesondere in einer Bewegungsrichtung des Towpreg-Halbzeugs vor dem Ablegebereich und/oder dem Wickelbereich. Das Erwärmen des Towpreg-Halbzeugs vor dem Ablegebereich und/oder dem Wickelbereich kann insbesondere in einem abgeschirmten Bereich, beispielsweise innerhalb eines Prozessgehäuses, erfolgen. Es ist insbesondere bevorzugt, dass das Towpreg-Halbzeug zunächst erwärmt wird und anschließend abgelegt und/oder gewickelt wird.

Es ist darüber hinaus bevorzugt, dass das Erwärmen des Towpreg-Halbzeugs beabstandet von einem Zwickelbereich erfolgt. Es ist ferner bevorzugt, dass ausschließlich eine erste Außenfläche, insbesondere eine Unterseite des Towpreg-Halbzeugs erwärmt wird, insbesondere mit dem Laserstrahl beaufschlagt, beispielsweise bestrahlt, wird. Die Unterseite ist insbesondere die Seite des Towpreg-Halbzeugs, die anschließend beim Ablegen und/oder Wickeln eine Ablegefläche kontaktiert.

### Seite 15a

Aufgrund der hohen Intensität der Laserstrahlung in Kombination mit der Möglichkeit einer schnellen und präzisen temperaturbasierten Laserleistungsregelung mithilfe von Temperatursensoren kann die Erwärmung und die hiermit einhergehende lokale Liquifizierung des Towpreg-Halbzeugs auf einen eingeschränkten Dickenbereich limitiert werden. Zudem kann so ein gezielter Viskositätsgradient in Dickenrichtung eingestellt werden.

Es ist darüber hinaus bevorzugt, dass das Towpreg-Halbzeug auf eine Verarbeitungstemperatur, beispielsweise mehr als 80 Grad Celsius oder mehr als 90 Grad Celsius, auf eine Vernetzungstemperatur, beispielsweise mehr als 120 Grad, erwärmt wird. Ferner ist es bevorzugt, dass das Towpreg-Halbzeug mit einer Längsspannung von mehr als 20 Newton, mehr als 50 Newton, mehr als 100 Newton und/oder mehr als 200 Newton geführt wird. Des Weiteren ist es bevorzugt, dass das Towpreg-Halbzeug mit einer Längsspannung von mehr als 200 Newton, vorzugsweise mehr als 300 Newton, insbesondere mehr als 500 Newton, geführt wird.

Gemäß einem weiteren Aspekt wird die eingangs genannte Aufgabe gelöst durch ein Bauteil, insbesondere einen Drucktank, vorzugsweise einen Gasdrucktank für Gase, beispielsweise einen Wasserstofftank, hergestellt mit einem Verfahren nach einer der im Vorherigen beschriebenen Ausführungsvarianten. Der Wasserstofftank ist beispielsweise ein Wasserstofftank für mobile Anwendungen.

Das Verfahren und seine möglichen Fortbildungen weisen Merkmale bzw. Verfahrensschritte auf, die sie insbesondere dafür geeignet machen, für eine Ablagevorrichtung und ihre Fortbildungen verwendet zu werden.

Für weitere Vorteile, Ausführungsvarianten und Ausführungsdetails der weiteren Aspekte und ihrer möglichen Fortbildungen wird auch auf die zuvor erfolgte Beschreibung zu den entsprechenden Merkmalen und Fortbildungen der Ablagevorrichtung verwiesen.

Bevorzugte Ausführungsbeispiele werden exemplarisch anhand der beiliegenden

Figuren erläutert. Es zeigen:
- Figur 1:: eine schematische, zweidimensionale Ansicht einer beispielhaften Ausführungsform einer Ablagevorrichtung;
- Figur 2:: eine weitere schematische, zweidimensionale Ansicht einer beispielhaften Ausführungsform einer Ablagevorrichtung;
- Figur 3:: eine weitere schematische, zweidimensionale Ansicht einer beispielhaften Ausführungsform einer Ablagevorrichtung;
- Figur 4:: eine schematische, zweidimensionale Ansicht einer beispielhaften Ausführungsform eines Ablagesystems;
- Figur 5:: eine weitere schematische, zweidimensionale Ansicht einer beispielhaften Ausführungsform eines Ablagesystems; und
- Figur 6:: ein schematisches Verfahren.

In den Figuren sind gleiche oder im Wesentlichen funktionsgleiche bzw. -ähnliche Elemente mit den gleichen Bezugszeichen bezeichnet.

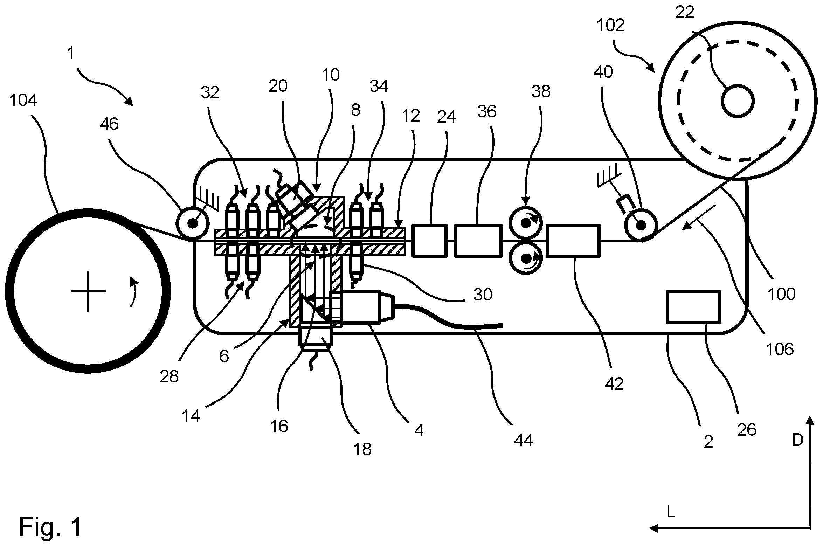

Figur 1 zeigt eine schematische, zweidimensionale Ansicht einer beispielhaften Ausführungsform einer Ablagevorrichtung 1. Die Ablagevorrichtung 1 umfasst eine Ablageeinheit 2 zur Führung eines Towpreg-Halbzeugs 100. Darüber hinaus weist die Ablagevorrichtung 1 eine Lasereinheit 4 zur Emission eines Laserstrahls 6 auf. Die Lasereinheit 4 ist derart angeordnet und ausgebildet, dass das Towpreg-Halbzeug 100 in einem Erwärmungsbereich 8 mit dem Laserstrahl 6 beaufschlagbar ist.

Die Ablagevorrichtung 1 umfasst darüber hinaus ein Prozessgehäuse 10. Das Prozessgehäuse 10 weist einen Gehäuseeintritt und einen Gehäuseaustritt auf, wobei das Towpreg-Halbzeug 100 durch das Prozessgehäuse 10 hindurchgeführt ist. Insbesondere ist das Towpreg-Halbzeug 100 durch einen ersten Gehäuseabschnitt 12 des Prozessgehäuses 10 geführt, welcher den Gehäuseeintritt umfasst. Das Prozessgehäuse 10 weist darüber hinaus einen zweiten Gehäuseabschnitt 14 auf. Die Gehäuseabschnitte 12, 14 weisen jeweils einen Innenraum mit einer Durchtrittsrichtung auf. Die Durchtrittsrichtung des ersten Gehäuseabschnitts 12 ist im Wesentlichen parallel zur Bewegungsrichtung 106 des Towpreg-Halbzeugs 100 bzw. parallel zu einer Führungsstrecke der Ablagevorrichtung 1. Die Durchtrittsrichtung des zweiten Gehäuseabschnittes 14 ist im Wesentlichen orthogonal zur Durchtrittsrichtung des ersten Gehäuseabschnitts 12 sowie zur Bewegungsrichtung 106 des Towpreg-Halbzeugs im Bereich des Prozessgehäuses 10.

Die Lasereinheit 4 ist mit dem Prozessgehäuse 10, insbesondere mit dem zweiten Gehäuseabschnitt 14, gekoppelt. In dem zweiten Gehäuseabschnitt 14 ist darüber hinaus ein Teilerspiegel 16 in dem Strahlengang des Laserstrahls angeordnet, der den Laserstrahl 6 um 90 Bogengrad umlenkt. Infolgedessen wird der von der Lasereinheit 4 emittierte Laserstrahl 6, der zunächst im Wesentlichen parallel zum Towpreg-Halbzeug 100 ausgerichtet ist, derart umgelenkt, dass der Laserstrahl 6 im Wesentlichen orthogonal auf das Towpreg-Halbzeug 100 trifft. Insbesondere trifft der Laserstrahl 6 innerhalb des Erwärmungsbereiches 8 auf das Towpreg-Halbzeug 100.

Um eine optimale Verarbeitbarkeit des Towpreg-Halbzeugs 100 zu gewährleisten, weist die Ablagevorrichtung 1 eine erste Temperaturmesseinheit 18 und eine zweite Temperaturmesseinheit 20 auf. Die erste Temperaturmesseinheit 18 ist hinter dem Teilerspiegel 16 angeordnet, sodass eine durch den Teilerspiegel 16 transmittierte Wärmestrahlung des Erwärmungsbereiches 8 erfasst wird und somit eine erste Temperatur des Towpreg-Halbzeugs 100 ermittelbar ist. Insbesondere wird mittels der ersten Temperaturmesseinheit 18 eine Temperatur einer ersten Außenfläche, hier der laserbestrahlten Unterseite des Towpreg-Halbzeugs 100 ermittelt. Mittels der zweiten Temperaturmesseinheit 20 wird eine Temperatur der der Unterseite gegenüberliegend angeordneten zweiten Außenfläche, hier der Oberseite des Towpreg-Halbzeugs ermittelt.

Darüber hinaus umfasst die Ablagevorrichtung 1 weitere Temperaturmesseinheiten 28 bis 34, mit denen die Temperatur, insbesondere eine Oberflächentemperatur, des Towpreg-Halbzeugs in Bewegungsrichtung 106 vor dem Erwärmungsbereich 8 und hinter dem Erwärmungsbereich 108 ermöglicht.

Die Ablagevorrichtung 1 umfasst darüber hinaus eine Vorspannungseinheit 22 zur Erzeugung einer Längsspannung im Towpreg-Halbzeug 100, wobei vorzugsweise die Vorspannungseinheit 22 derart ausgebildet ist, dass die Längsspannung von 0 Newton bis mehr als 200 Newton geregelt wird. Ferner umfasst die Ablagevorrichtung 1 eine Vorwärmstation 24, in der mittels Heizgas und/oder infraroter Strahlung das Towpreg-Halbzeug 100 vorgewärmt werden kann. Unter der Führungsstrecke ist diejenige Strecke zu verstehen, entlang welcher das Towpreg-Halbzeug 100 geführt wird. In der Fig. 1 erstreckt sich die Führungsstrecke von einem Entnahmepunkt der Vorspanneinheit 22, durch die Ablageeinheit 2 hindurch bis hin zu einem Wickel-/ Aufnahme-/ Ablegebereich eines Bauteils 104. Insbesondere kann der Wickel-/ Aufnahme-/ Ablegebereich ein Zwickelbereich sein.

Das Towpreg-Halbzeug 100 ist zwischen der Kraftmesseinheit 40 und der Führungsrolle 46 in Längsrichtung L geführt. Die Längsrichtung des Towpreg-Halbzeugs 100 ist insbesondere als eine Haupterstreckungsrichtung zu verstehen. In Bewegungsrichtung 106 vor der Kraftmesseinheit 40 ist die Längsrichtung des Towpreg-Halbzeugs 100 in Bewegungsrichtung 106 ausgerichtet. Die Richtung der Dicke des Towpreg-Halbzeugs 100 ist orthogonal zur Längsrichtung des Towpreg-Halbzeugs 100 ausgerichtet, insbesondere in Richtung D. Die Dickenrichtung ist die Richtung, die orthogonal zu einer flächigen Erstreckung des Towpreg-Halbzeugs 100 ausgerichtet ist. In Dickenrichtung weist das Towpreg-Halbzeug 100 zwei Randschichten auf, zwischen denen eine Mittenschicht angeordnet ist.

Darüber hinaus weist die Ablagevorrichtung 1 eine Steuerungsvorrichtung 26 auf, die signaltechnisch mit der Lasereinheit 4 und der Ablageeinheit 2 gekoppelt ist. Die Steuerungsvorrichtung 26 ist zum Steuern und Regeln zumindest eines Laserparameters der Lasereinheit 4, beispielsweise einer Laserleistung, einer mit der Vorschubeinheit 38 einstellbaren Vorschubgeschwindigkeit des Towpreg-Halbzeugs 100 und der Längsspannung eingerichtet.

Die Steuerungsvorrichtung 26 ist insbesondere eingerichtet, um die Lasereinheit 4 derart zu steuern, dass das Towpreg-Halbzeug 100 durch den Laserstrahl 6 zumindest teilweise liquifiziert wird. Ferner kann die Steuerungsvorrichtung 26 eingerichtet sein, die Lasereinheit 4 derart zu steuern, dass eine Randschicht des Towpreg-Halbzeugs 100 liquifiziert wird und eine Mittenschicht des Towpreg-Halbzeugs 100 im Wesentlichen unliquifiziert bleibt. Mit anderen Worten wird ein Formzustand der Mittenschicht des Towpreg-Halbzeugs nicht geändert. Darüber hinaus kann die Steuerungsvorrichtung derart eingerichtet sein, dass die Lasereinheit 4 derart gesteuert wird, dass eine vordefinierte Viskosität der Randschicht einstellbar ist. Darüber hinaus kann die Steuerungsvorrichtung 26 eingerichtet sein, die Lasereinheit 4 derart zu steuern, dass das Towpreg-Halbzeug 100 auf eine Temperatur erwärmt wird, die zumindest einer Vernetzungstemperatur des Towpreg-Halbzeugs 100 entspricht.

Darüber hinaus weist die Ablagevorrichtung 1 eine Towpreg-Führung 36, 42 auf, die vor bzw. nach der Vorschubeinheit 38 angeordnet sind. Mit der Vorschubeinheit 38 wird ein Vorschub in Vorschubrichtung 106 des Towpreg-Halbzeuges 100 eingestellt. Darüber hinaus weist die Ablagevorrichtung 1 die Vorspannungseinheit 22 auf. Mittels der Führungsrolle 46 wird der Austrittswinkel des Towpreg-Halbzeugs 100 aus dem Prozessgehäuse 10 eingestellt.

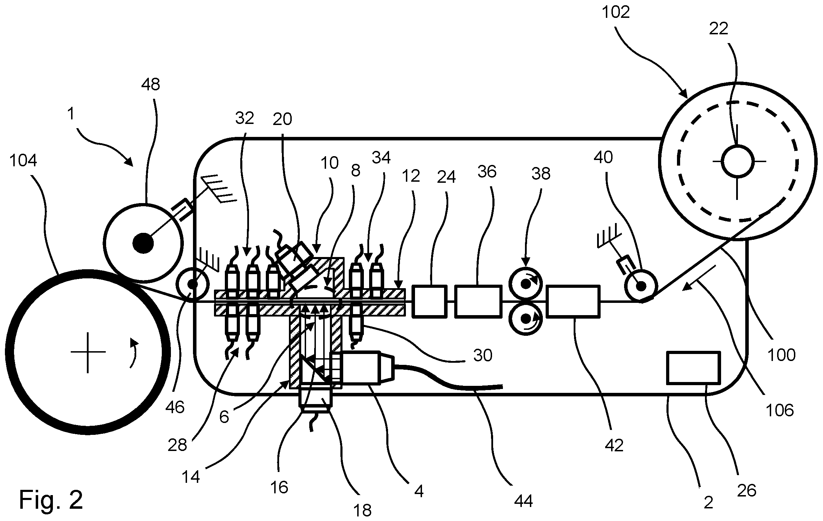

Die in Figur 2 gezeigte Ablagevorrichtung 1 weist einen ähnlichen Aufbau auf, wobei hier zusätzlich eine Andruckrolle 48 vorgesehen ist, die angeordnet und ausgebildet ist, um das Towpreg-Halbzeug auf dem Bauteil anzudrucken

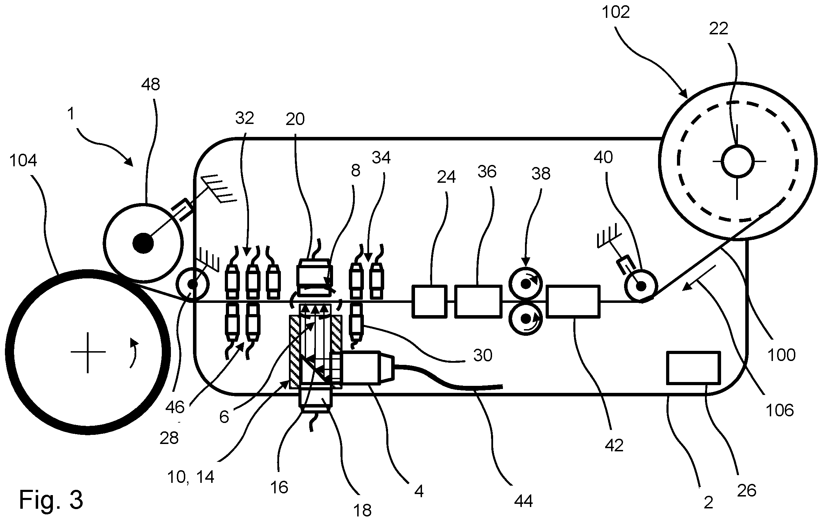

Figur 3 zeigt eine weitere mögliche Ausführungsvariante der Ablagevorrichtung 1. Hier ist das Prozessgehäuse 10 kleiner ausgebildet, und wird insbesondere durch den zweiten Gehäuseabschnitt 14 ausgebildet.

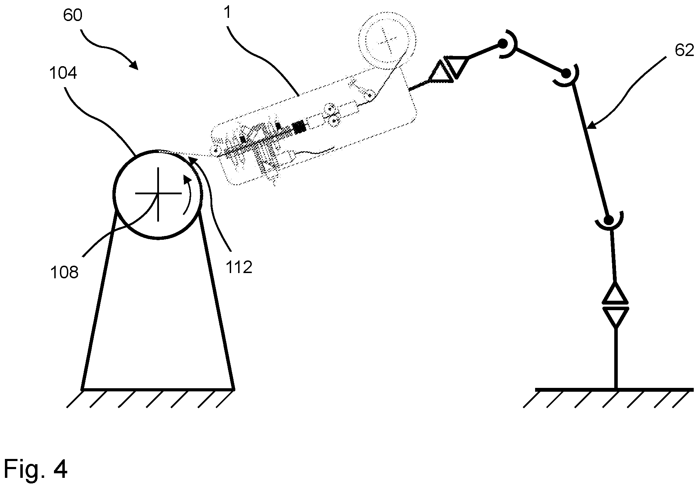

Figur 4 zeigt eine schematische, zweidimensionale Ansicht einer beispielhaften Ausführungsform eines Ablagesystems 60. Das Ablagesystem 60 weist die Ablageeinheit 1 und eine Handhabungseinheit 62 auf, wobei die Handhabungseinheit 62 angeordnet und ausgebildet ist, um die Ablagevorrichtung 1 zu bewegen, insbesondere um ein Verfahren zur Herstellung eines Bauteils aus einem duroplastischen Towpreg-Halbzeug zu ermöglichen. Die Handhabungseinheit 62 ist vorliegend als Knickarmroboter ausgebildet. Alternativ kann die Handhabungseinheit 62 auch als eine Gantrymaschine ausgebildet sein. Das Bauteil 104 rotiert um eine Wickelachse 108, sodass das Bauteil 104 das Towpreg-Halbzeug 100 im Wesentlichen automatisch aufwickelt.

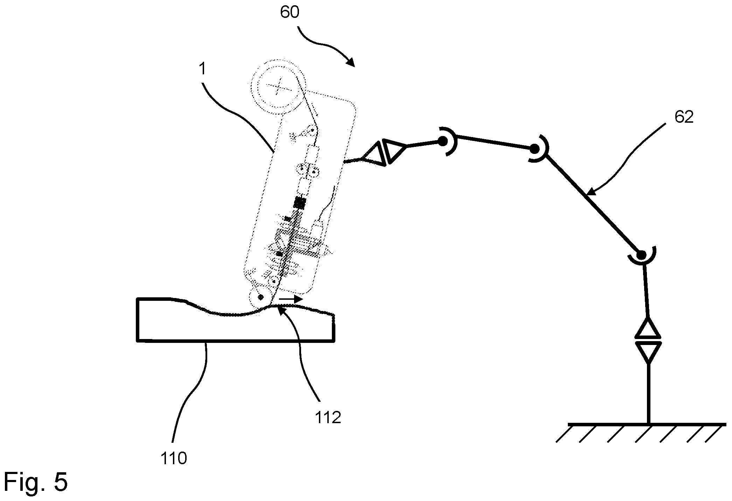

In Figur 5 ist das beschriebene Ablagesystem 60 im Zusammenhang mit einem Ablegeverfahren gezeigt. Hier wird das Towpreg-Halbzeug 100 auf einem Ablagetisch 100 innerhalb eines Ablegebereiches 112 abgelegt.

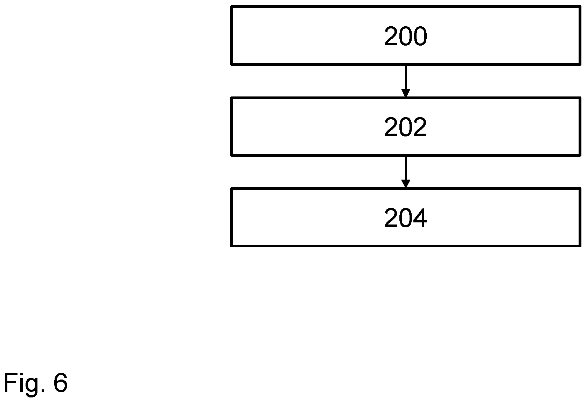

Figur 6 zeigt ein schematisches Verfahren zur Herstellung eines Bauteils 104 aus einem duroplastischen Towpreg-Halbzeug 100. In Schritt 200 wird das duroplastische Towpreg-Halbzeug 100 bereitgestellt. In Schritt 202 wird das Towpreg-Halbzeug 100 zu dem Ablegebereich 112 geführt. In Schritt 204 wird das Towpreg-Halbzeug 100 vor dem Ablegebereich 112 mit einem Laserstrahl 6 erwärmt. Das Towpreg-Halbzeug 100 wird mit dem Laserstrahl 6 entlang der Führungsstrecke des Towpreg-Halbzeugs 100 gesehen kurz vor dem Ablege- bzw. Wickelvorgang erwärmt.

Aufgrund der hohen Intensität der Laserstrahlung in Kombination mit der Laserleistungsregelung kann die Erwärmung und die hiermit einhergehende lokale Liquifizierung des Towpreg-Halbzeugs auf einen eingeschränkten Dickenbereich des Towpreg-Halbzeugs limitiert werden. Somit kann ein gezielter Viskositätsgradient in Dickenrichtung eingestellt werden und eine verbesserte Verarbeitung des Towpreg-Halbzeugs 100 gewährleistet werden. Das Erwärmen des Towpreg-Halbzeugs 100 erfolgt beabstandet von einem Zwickelbereich. Beispielsweise kann das Towpreg-Halbzeug auf eine Verarbeitungstemperatur, beispielsweise 80 Grad erwärmt werden. Alternativ kann das Towpreg-Halbzeug auch auf eine Vernetzungstemperatur, beispielsweise mehr als 120 Grad, erwärmt werden. Die Erfinder haben herausgefunden, dass bei der Erwärmung des Towpreg-Halbzeugs 100 auf eine Temperatur über der Vernetzungstemperatur die anschließende Bearbeitung im Ofen deutlich reduziert werden kann.

### BEZUGSZEICHEN

- 1: Ablagevorrichtung
- 2: Ablageeinheit
- 4: Lasereinheit
- 6: Laserstrahl
- 8: Erwärmungsbereich
- 10: Prozessgehäuse
- 12: erster Gehäuseabschnitt
- 14: zweiter Gehäuseabschnitt
- 16: Teilerspiegel
- 18: erste Temperaturmesseinheit
- 20: zweite Temperaturmesseinheit
- 22: Vorspannungseinheit
- 24: Vorwärmstation
- 26: Steuerungsvorrichtung
- 28: Temperaturmesseinheiten
- 30: Temperaturmesseinheiten
- 32: Temperaturmesseinheiten
- 34: Temperaturmesseinheiten
- 36: Towpreg-Führung
- 38: Vorschubeinheit
- 40: Kraftmesseinheit
- 42: Towpreg-Führung
- 44: Laserlichtleitfaser
- 46: Führungsrolle
- 48: Andruckrolle
- 60: Ablagesystem
- 62: Handhabungseinheit
- 100: Towpreg-Halbzeug
- 102: Materialspule
- 104: Bauteil
- 106: Bewegungsrichtung
- 108: Wickelachse
- 110: Ablagetisch
- 112: Ablegebereich

## Patentansprüche

1. Ablagevorrichtung (1) zur Herstellung eines Bauteils (104) aus einem duroplastischen Towpreg-Halbzeug (100), umfassend
- eine Ablageeinheit (2) zur Führung des Towpreg-Halbzeugs (100),
- eine Lasereinheit (4) zur Emission eines Laserstrahls (6), und
- einen Erwärmungsbereich (8),
- wobei die Lasereinheit (4) angeordnet und ausgebildet ist, das Towpreg-Halbzeug (100) in dem Erwärmungsbereich (8) mit dem Laserstrahl (6) zu beaufschlagen,
- **dadurch gekennzeichnet, dass** die Lasereinheit (4) angeordnet und ausgebildet ist, zumindest eine erste Außenfläche des Towpreg-Halbzeugs (100) innerhalb des Erwärmungsbereichs (8) mit dem Laserstrahl (6) zu beaufschlagen und die Ablageeinheit (2) ein Prozessgehäuse (10) umfasst, durch welches das Towpreg-Halbzeug (100) hindurchführbar ist, wobei der Erwärmungsbereich (8) innerhalb des Prozessgehäuses (10) befindlich ist.

2. Ablagevorrichtung (1) nach dem vorherigen Anspruch, wobei die Lasereinheit (4) mit dem Prozessgehäuse (10) gekoppelt ist, insbesondere an oder in dem Prozessgehäuse (10) angeordnet ist.

3. Ablagevorrichtung (1) nach einem der vorherigen Ansprüche, wobei
- die Lasereinheit (4) und/oder die Ablageeinheit (2) derart angeordnet und ausgebildet ist bzw. sind, dass der Laserstrahl (6) im Wesentlichen orthogonal auf das Towpreg-Halbzeug (100) trifft, und/oder
- in einem Strahlengang des Laserstrahls (6) zwischen der Lasereinheit (4) und dem Erwärmungsbereich (8) ein Teilerspiegel (16) angeordnet ist, der den Laserstrahl (6) umlenkt, insbesondere um 90 Bogengrad, und/oder eine von dem Towpreg-Halbzeug (100) in dem Erwärmungsbereich (8) erzeugte Wärmestrahlung transmittiert.

4. Ablagevorrichtung (1) nach einem der vorherigen Ansprüche,
- umfassend eine erste Temperaturmesseinheit (18), die angeordnet und ausgebildet ist, um eine erste Temperatur des Towpreg-Halbzeugs (100) in dem Erwärmungsbereich (8) zu ermitteln, und/oder
- umfassend die erste Temperaturmesseinheit (18), wobei die erste Temperaturmesseinheit (18) angeordnet und ausgebildet ist, um die durch den Teilerspiegel (16) transmittierte Wärmestrahlung zu erfassen und die erste Temperatur des Towpreg-Halbzeugs (100) in dem Erwärmungsbereich (8) basierend auf der erfassten Wärmestrahlung zu ermitteln.

5. Ablagevorrichtung (1) nach einem der vorherigen Ansprüche, umfassend eine zweite Temperaturmesseinheit (20), die angeordnet und ausgebildet ist, eine zweite Temperatur einer der ersten Außenfläche gegenüberliegenden zweiten Außenfläche des Towpreg-Halbzeugs (100) zu ermitteln.

6. Ablagevorrichtung (1) nach einem der vorherigen Ansprüche, umfassend eine Vorspannungseinheit (22) zur Erzeugung einer Längsspannung im Towpreg-Halbzeug (100), wobei vorzugsweise die Vorspannungseinheit (22) derart ausgebildet ist, dass die Längsspannung zwischen 0 N bis mehr als 200 N beträgt.

7. Ablagevorrichtung (1) nach einem der vorherigen Ansprüche, umfassend eine Vorwärmstation (24), die bezogen auf eine Bewegungsrichtung des Towpreg-Halbzeugs (100) vor dem Erwärmungsbereich (8) angeordnet ist.

8. Ablagevorrichtung (1) nach einem der vorherigen Ansprüche, umfassend eine mit der Lasereinheit (4) und/oder mit der Ablageeinheit (2) signaltechnische gekoppelte Steuerungsvorrichtung (26) zum Steuern und/oder Regeln zumindest eines Laserparameters der Lasereinheit (4), einer Vorschubgeschwindigkeit des Towpreg-Halbzeugs (100) und/oder der Längsspannung des Towpreg-Halbzeugs (100), wobei vorzugsweise
- die Steuerungsvorrichtung (26) eingerichtet ist, die Lasereinheit (4) derart zu steuern, dass das Towpreg-Halbzeug (100) durch den Laserstrahl (6) zumindest teilweise, vorzugsweise vollständig, liquifiziert wird,
- die Steuerungsvorrichtung (26) eingerichtet ist, die Lasereinheit (4) derart zu steuern, dass eine Randschicht des Towpreg-Halbzeugs (100) liquifiziert wird, und/oder
- die Steuerungsvorrichtung (26) eingerichtet ist, die Lasereinheit (4) derart zu steuern, dass eine vordefinierte Viskosität der Randschicht eingestellt wird, und/oder
- die Steuerungsvorrichtung (26) eingerichtet ist, die Lasereinheit (4) derart zu steuern, dass das Towpreg-Halbzeug (100) auf eine Temperatur erwärmt wird, die zumindest einer Vernetzungstemperatur des Towpreg-Halbzeugs (100) entspricht.

9. Ablagevorrichtung (1) nach dem vorherigen Anspruch 8, wobei die Steuerungsvorrichtung (26) eingerichtet ist, um die Lasereinheit (4) basierend auf der ersten Temperatur, der zweiten Temperatur und/oder einer weiteren von dem Towpreg-Halbzeug (100) gemessenen Temperatur innerhalb des Erwärmungsbereiches (8) und/oder einer von dem Towpreg-Halbzeug (100) gemessenen Temperatur vor und/oder nach dem Erwärmungsbereich (8) in Bewegungsrichtung des Towpreg-Halbzeugs (100) zu steuern.

10. Ablagesystem (60) zur Herstellung eines Bauteils (104) aus einem duroplastischen Towpreg-Halbzeug (100), umfassend
- eine Ablagevorrichtung (1) nach einem der vorherigen Ansprüche 1-9, und
- eine mit der Ablagevorrichtung (1) gekoppelte Handhabungseinheit (62),
- wobei die Handhabungseinheit (62) angeordnet und ausgebildet ist, um die Ablagevorrichtung (1) zu bewegen.

11. Verfahren zur Herstellung eines Bauteils (104) aus einem duroplastischen Towpreg-Halbzeug (100) mit einer Ablagevorrichtung (1) nach einem der Ansprüche 1-9, umfassend die Schritte:
- Bereitstellen (200) des duroplastischen Towpreg-Halbzeugs (100),
- Führen (202) des Towpreg-Halbzeugs (100) entlang einer Führungsstrecke zu einem Ablegebereich und/oder einem Wickelbereich, und
- Erwärmen (204) des Towpreg-Halbzeugs (100) in dem Erwärmungsbereich (8) mit dem Laserstrahl (6), wobei der Erwärmungsbereich (8) entlang der Führungsstrecke vor dem Ablegebereich und/oder dem Wickelbereich ist.

12. Verfahren nach dem vorherigen Anspruch, wobei das Erwärmen (204) des Towpreg-Halbzeugs (100) beabstandet von einem Zwickelbereich erfolgt.

13. Verfahren nach einem der vorherigen Ansprüche, wobei das Towpreg-Halbzeug (100) auf eine Verarbeitungstemperatur, beispielsweise mehr als 80 °C oder mehr als 90°C, und/oder auf eine Vernetzungstemperatur, beispielsweise mehr als 120 °C, erwärmt wird.

14. Verfahren nach einem der vorherigen Ansprüche, wobei das Towpreg-Halbzeug (100) mit einer Längsspannung von mehr als 20 N, mehr als 50 N, mehr als 100 N und/oder mehr als 200 N geführt wird.

## Claims

1. Placement device (1) for producing a component (104) from a thermoset towpreg semi-finished product (100), comprising
- a placement unit (2) for guiding the towpreg semi-finished product (100),
- a laser unit (4) for emitting a laser beam (6), and
- a heating section (8),
- wherein the laser unit (4) is arranged and configured to apply the laser beam (6) to the towpreg semi-finished product (100) in the heating area (8),
- **characterized in that** the laser unit (4) is arranged and configured to apply the laser beam (6) to at least a first outer surface of the towpreg semi-finished product (100) within the heating area (8) and that the placement unit (2) comprises a process housing (10) through which the towpreg semi-finished product (100) can be passed, wherein the heating area (8) is located within the process housing (10).

2. Placement device (1) according to the preceding claim, wherein the laser unit (4) is coupled to the process housing (10), in particular is arranged on or in the process housing (10).

3. Placement device (1) according to any one of the preceding claims, wherein
- the laser unit (4) and/or the placement unit (2) is/are arranged and configured such that the laser beam (6) impinges substantially orthogonally on the towpreg semi-finished product (100), and/or
- a beam splitter mirror (16) is arranged in a beam path of the laser beam (6) between the laser unit (4) and the heating region (8), which mirror deflects the laser beam (6), in particular by 90 degrees, and/or transmits a thermal radiation generated by the towpreg semi-finished product (100) in the heating region (8).

4. Placement device (1) according to any one of the preceding claims,
- comprising a first temperature measuring unit (18) arranged and configured to determine a first temperature of the towpreg semi-finished product (100) in the heating region (8), and/or
- comprising the first temperature measuring unit (18), wherein the first temperature measuring unit (18) is arranged and configured to detect thermal radiation transmitted through the beam splitter mirror (16) and to determine the first temperature of the towpreg semi-finished product (100) in the heating area (8) based on the detected thermal radiation.

5. Placement device (1) according to any one of the preceding claims, comprising a second temperature measuring unit (20) arranged and configured to detect a second temperature of a second outer surface of the towpreg semi-finished product (100) opposite to the first outer surface.

6. Placement device (1) according to any one of the preceding claims, comprising a prestressing unit (22) for generating a longitudinal tension in the towpreg semi-finished product (100), preferably the prestressing unit (22) being configured such that the longitudinal tension is between 0 N to more than 200 N.

7. Placement device (1) according to any one of the preceding claims, comprising a preheating station (24) arranged upstream of the heating area (8) with respect to a direction of movement of the towpreg semi-finished product (100).

8. Placement device (1) according to any one of the preceding claims, comprising a control device (26), signal-technically coupled to the laser unit (4) and/or to the placement unit (2), for controlling and/or loop-controlling at least one laser parameter of the laser unit (4), a feed speed of the towpreg semi-finished product (100) and/or the longitudinal tension of the towpreg semi-finished product (100), wherein preferably
- the control device (26) is set up to control the laser unit (4) in such a way that the towpreg semi-finished product (100) is at least partially, preferably completely, liquified by the laser beam (6),
- the control device (26) is arranged to control the laser unit (4) such that an edge layer of the towpreg semi-finished product (100) is liquified, and/or
- the control device (26) is set up to control the laser unit (4) such that a predefined viscosity of the edge layer is set, and/or
- the control device (26) is set up to control the laser unit (4) such that the towpreg semi-finished product (100) is heated to a temperature which corresponds at least to a curative temperature of the towpreg semi-finished product (100).

9. Placement device (1) according to the preceding claim 8, wherein the control device (26) is arranged to control the laser unit (4) based on the first temperature, the second temperature and/or another temperature measured of the towpreg semi-finished product (100) within the heating area (8) and/or a temperature measured of the towpreg semi-finished product (100) before and/or after the heating area (8) in the direction of movement of the towpreg semi-finished product (100).

10. Placement system (60) for producing a component (104) from a thermoset towpreg semi-finished product (100), comprising
- a placement device (1) according to any of the preceding claims 1-9, and
- a handling unit (62) coupled to the placement device (1),
- wherein the handling unit (62) is arranged and configured to move the placement device (1).

11. Method of producing a component (104) from a thermoset towpreg semi-finished product (100) with a placement device (1) according to any of claims 1-9, comprising the steps:
- Providing (200) the thermoset towpreg semi-finished product (100),
- Guiding (202) the towpreg semi-finished product (100) along a guiding path to a placement area and/or a winding area, and
- Heating (204) the towpreg semi-finished product (100) in the heating area (8) with the laser beam (6), wherein the heating area (8) is along the guide path upstream of the placement area and/or the winding area.

12. Method according to the preceding claim, wherein the heating (204) of the towpreg semi-finished product (100) is spaced apart from a wrapping area.

13. Method according to any one of the preceding claims, wherein the towpreg semi-finished product (100) is heated to a processing temperature, for example more than 80 °C or more than 90 °C, and/or to a curative temperature, for example more than 120 °C.

14. Method according to any one of the preceding claims, wherein the towpreg semi-finished product (100) is guided with a longitudinal tension of more than 20 N, more than 50 N, more than 100 N and/or more than 200 N.

## Revendications

1. Dispositif de placement (1) pour la production d'un composant (104) à partir d'un produit semi-fini thermodurcissable towpreg (100), comprenant
- une unité de placement (2) pour guider le produit semi-fini towpreg (100),
- une unité laser (4) pour émettre un faisceau laser (6), et
- une section de chauffage (8),
- dans laquelle l'unité laser (4) est disposée et configurée pour appliquer le faisceau laser (6) au produit semi-fini towpreg (100) dans la zone de chauffage (8),
- **caractérisée par le fait que** l'unité laser (4) est disposée et configurée pour appliquer le faisceau laser (6) à au moins une première surface extérieure du produit semi-fini towpreg (100) dans la zone de chauffage (8) et que l'unité de placement (2) comprend un boîtier de traitement (10) à travers lequel le produit semi-fini towpreg (100) peut être passé, la zone de chauffage (8) étant située à l'intérieur du boîtier de traitement (10).

2. Dispositif de placement (1) selon la revendication précédente, dans lequel l'unité laser (4) est couplée au boîtier de traitement (10), en particulier est disposée sur ou dans le boîtier de traitement (10).

3. Dispositif de placement (1) selon l'une quelconque des revendications précédentes, dans lequel.
- l'unité laser (4) et/ou l'unité de placement (2) est/sont disposée(s) et configurée(s) de manière à ce que le faisceau laser (6) frappe de manière sensiblement orthogonale le demi-produit towpreg (100), et/ou
- un miroir séparateur de faisceau (16) est disposé sur le trajet du faisceau laser (6) entre l'unité laser (4) et la zone de chauffage (8) ; ce miroir dévie le faisceau laser (6), en particulier de 90 degrés, et/ou transmet un rayonnement thermique généré par le produit semi-fini towpreg (100) dans la zone de chauffage (8).

4. Dispositif de mise en place (1) selon l'une quelconque des revendications précédentes,
- comprenant une première unité de mesure de la température (18) agencée et configurée pour déterminer une première température du produit semi-fini towpreg (100) dans la zone de chauffage (8), et/ou
- comprenant la première unité de mesure de la température (18), dans laquelle la première unité de mesure de la température (18) est agencée et configurée pour détecter le rayonnement thermique transmis à travers le miroir séparateur de faisceau (16) et pour déterminer la première température du produit semi-fini towpreg (100) dans la zone de chauffage (8) sur la base du rayonnement thermique détecté.

5. Dispositif de mise en place (1) selon l'une quelconque des revendications précédentes, comprenant une deuxième unité de mesure de température (20) agencée et configurée pour détecter une deuxième température d'une deuxième surface extérieure du produit semi-fini towpreg (100) opposée à la première surface extérieure.

6. Dispositif de mise en place (1) selon l'une quelconque des revendications précédentes, comprenant une unité de précontrainte (22) pour générer une tension longitudinale dans le semi-produit en towpreg (100). De préférence, l'unité de précontrainte (22) est configurée pour que la tension longitudinale soit comprise entre 0 N à plus de 200 N.

7. Dispositif de mise en place (1) selon l'une quelconque des revendications précédentes, comprenant un poste de préchauffage (24) disposé en amont de la zone de chauffage (8) par rapport à une direction de déplacement du semi-produit towpreg (100).

8. Dispositif de placement (1) selon l'une quelconque des revendications précédentes, comprenant un dispositif de commande (26), couplé techniquement à l'unité laser (4) et/ou à l'unité de placement (2), pour commander et/ou contrôler en boucle au moins un paramètre laser de l'unité laser (4), une vitesse d'avance du produit semi-fini en towpreg (100) et/ou la tension longitudinale du produit semi-fini en towpreg (100), dans lequel, de préférence.
- le dispositif de commande (26) est réglé pour commander l'unité laser (4) de manière à ce que le produit semi-fini towpreg (100) soit au moins partiellement, de préférence complètement, liquéfié par le faisceau laser (6),
- le dispositif de commande (26) est conçu pour commander l'unité laser (4) de manière à ce qu'une couche de bord du produit semi-fini en towpreg (100) soit liquéfiée, et/ou
- le dispositif de commande (26) est réglé pour commander l'unité laser (4) de telle sorte qu'une viscosité prédéfinie de la couche de bord soit réglée, et/ou
- le dispositif de commande (26) est configuré pour commander l'unité laser (4) de manière à ce que le produit semi-fini en towpreg (100) soit chauffé à une température correspondant au moins à une température de durcissement du produit semi-fini en towpreg (100).

9. Dispositif de mise en place (1) selon la revendication précédente 8, dans lequel le dispositif de commande (26) est agencé pour commander l'unité laser (4) en fonction de la première température, de la deuxième température et/ou d'une autre température mesurée du produit semi-fini en towpreg (100) dans la zone de chauffage (8) et/ou d'une température mesurée du produit semi-fini en towpreg (100) avant et/ou après la zone de chauffage (8) dans la direction de déplacement du produit semi-fini en towpreg (100).

10. Système de placement (60) pour la production d'un composant (104) à partir d'un demi-produit towpreg thermodurci (100), comprenant
- un dispositif de placement (1) selon l'une quelconque des revendications précédentes 1 à 9, et
- une unité de manutention (62) couplée au dispositif de placement (1),
- dans lequel l'unité de manutention (62) est agencée et configurée pour déplacer le dispositif de placement (1).

11. Procédé de fabrication d'un composant (104) à partir d'un demi-produit thermodurci towpreg (100) avec un dispositif de placement (1) selon l'une quelconque des revendications 1 à 9, comprenant les étapes :
- Fournir (200) le produit semi-fini thermodurcissable towpreg (100),
- Guider (202) le produit semi-fini en towpreg (100) le long d'un chemin de guidage jusqu'à une zone de placement et/ou une zone d'enroulement, et
- Chauffer (204) le produit semi-fini towpreg (100) dans la zone de chauffage (8) avec le faisceau laser (6), la zone de chauffage (8) se trouvant le long du chemin de guidage en amont de la zone de placement et/ou de la zone d'enroulement.

12. Procédé selon la revendication précédente, dans lequel le chauffage (204) du semi-produit towpreg (100) est espacé d'une zone d'emballage.

13. Procédé selon l'une quelconque des revendications précédentes, dans lequel le semi-produit en towpreg (100) est chauffé à une température de mise en œuvre, par exemple supérieure à 80 °C ou supérieure à 90 °C, et/ou à une température de durcissement, par exemple supérieure à 120 °C.

14. Procédé selon l'une quelconque des revendications précédentes, dans lequel le semi-produit towpreg (100) est guidé avec une tension longitudinale supérieure à 20 N, supérieure à 50 N, supérieure à 100 N et/ou supérieure à 200 N.
